# EUROPEAN PATENT APPLICATION

(11) **EP 4 601 341 A1**
(43) Date of publication of application: **13.08.2025**
(21) Application number: 24156783.3
(22) Date of filing: 09.02.2024
(51) Int. Cl.: H04W 12/041, H04W 12/0433, H04W 36/00, H04W 36/08, H04W 76/27

(54) **USER EQUIPMENT, BASE STATION, AND BASE STATION SYSTEM**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

Provided is a user equipment, user equipment, UE, comprising circuitry which, in operation, stores a list of parameter pairs, wherein each parameter pair includes a next hop, NH, parameter and an NH chaining counter, NCC, and each parameter pair is associated with one of at least one candidate base station. The US further comprises a transceiver which, in operation, receives a cell switch command including an indication of a target cell of a target base station, the target base station being one of the at least one candidate base station. The circuitry which, in operation, derives a session key using a parameter pair associated with a serving base station or a parameter pair associated with the target base station; and uses the derived session key for communication with the target base station.

## Description

### BACKGROUND

### 1. Technical field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates inter-base station LTM cell switch operations.

In an embodiment, the techniques disclosed here feature: A user equipment, UE, comprising circuitry which, in operation, stores a list of parameter pairs, wherein each parameter pair includes a next hop, NH, parameter and an NH chaining counter, NCC, and each parameter pair is associated with one of at least one candidate base station; and a transceiver which, in operation, receives a cell switch command including an indication of a target cell of a target base station, the target base station being one of the at least one candidate base station, wherein the circuitry which, in operation, derives a session key using a parameter pair associated with a serving base station or a parameter pair associated with the target base station; and uses the derived session key for communication with the target base station.

In an embodiment, the techniques disclosed here feature: A user equipment, UE, comprising a transceiver which, in operation, receives a cell switch command including an indication of a target cell of a target base station, and an indication of a next hop chaining counter, NCC; and circuitry which, in operation, derives a session key using the NCC indicated in the cell switch command, and uses the derived session key for communication with the target base station.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a split-gNB architecture, where a gNB is split into a gNB-central unit and one or more gNB distributed units;
- **Fig. 3**: is a diagram explaining the processes of horizontal and vertical key derivation;
- **Fig. 4**: illustrates a method for security key handling in a layer 3 handover process;
- **Fig. 5**: illustrates two exemplary scenarios of cell switches performed by a UE;
- **Fig. 6**: illustrates an overview of a method for inter-gNB LTM cell switch;
- **Fig. 7a and 7b**: illustrate a specific implementation of a preparation phase, a first cell switch and a subsequent cell switch according to an embodiment;
- **Fig. 8a and 8b**: illustrate a specific implementation of a preparation phase, a first cell switch, and a subsequent cell switch according to an embodiment;
- **Fig. 9a and 9b**: illustrate a specific implementation of a preparation phase, a first cell, and a subsequent cell switch according to an embodiment;
- **Fig. 10**: illustrates a general, simplified and exemplary block diagram of a user equipment, UE;
- **Fig. 11a**: shows a functional structure of circuitry of a user equipment;
- **Fig. 11b**: shows a functional structure of circuitry of a base station; and
- **Fig. 12**: shows exemplary functional split options in 5G O-RAN.

### DETAILED DESCRIPTION

### 5G NR system architecture and protocol stacks

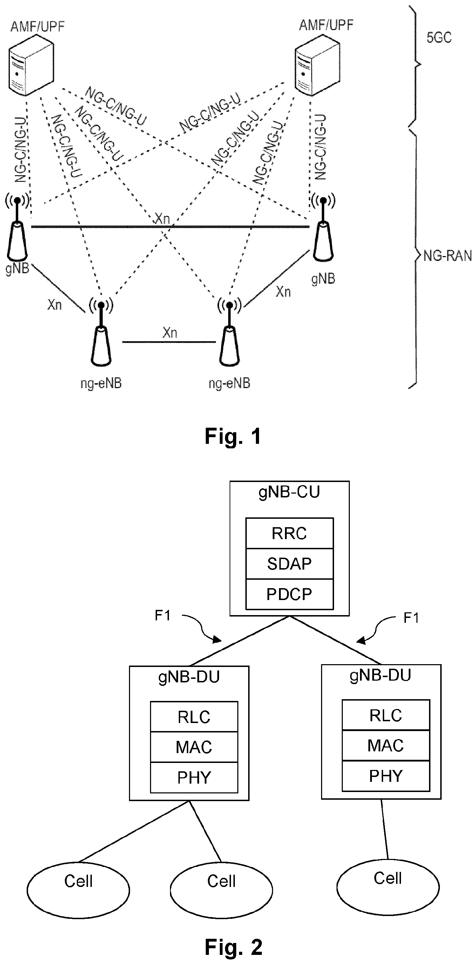

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Split gNB architecture

In the 3GPP standard, a gNB can be split into a gNB-CU (Central Unit) and one or more gNB-DUs (Distributed Units). This is illustrated in **Fig. 2****.**

The gNB-CU is a logical node that provides support for the higher layers of the protocol stack such as SDAP, PDCP and RRC. On the other hand, the gNB-DU is a logical node that provides support for the lower layers of the protocol stack such as RLC, MAC and Physical layer. Also, note that SDAP layer need not be present if the CU is connected to a 4G Core network as there should be a 5G core network to support SDAP.

Therefore, the PHY and MAC layers are terminated at the gNB-DU, while Layer 3 (RRC) is terminated at the gNB-CU.

There may be a single CU for each gNB, i.e. one gNB-DU may be connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU may be able to support one or more cells, so one gNB can control hundreds of cells unlike the 4G BTS. One cell is supported by only one gNB-DU.

Also, note that the interface between gNB-CU and gNB-DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.6.0 "3rd Generation Partnership Project; Technical Specification Group Radio Access Network; NG-RAN; Architecture description (Release 17)", September 2023, e.g. section 6.1. The F1 interface application protocol is specified in more detail e.g. in 3GPP TS 38.473 v17.6.0 "3rd Generation Partnership Project; Technical Specification Group Radio Access Network; NG-RAN; F1 application protocol (FLAP) (Release 17)", September 2023.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Layer 2 Mobility (LTM)

Mobility support is a distinct feature of mobile networks which offers service continuity to moving UEs. When a UE moves from the coverage area of one cell to another, a handover process is initiated to change the serving cell for the UE. Handover (mobility) is a process of transferring an ongoing communication session of a user equipment (UE) from one cell (i.e., base station or gNodeB (gNB)) to another cell in connected state. The primary motivation behind handover is to ensure seamless connectivity and continuity of service for the user, especially while the user is on the move.

In all the handover types until Release 17, a serving cell change is triggered by layer 3 (L3) measurements and is done by RRC signaling (i.e., Reconfiguration with Synchronization information element) for change of primary cell (PCell) and primary secondary cell (PSCell). The serving cell change may be based on layer 3 (L3) measurements and radio resource control (RRC) signaling. All cases require reconfiguration of upper layers (e.g., RRC or PDCP) and/or resetting of lower layers (e.g., MAC and/or PHY) which leads to longer latency, larger overhead and longer interruption time than beam level mobility.

Release 18 has introduced layer 1 (L1)/L2 based mobility also known as lower layer triggered mobility (LTM) to enable a serving cell change via L1/L2 signaling, while keeping configuration of the upper layers and/or minimizing changes of configuration of the lower layers. This helps to reduce the latency, overhead and interruption time during handover. The LTM supports both intra-distributed unit (DU) and intra-central unit (CU)-inter-DU mobility. During the LTM, user plane is continued whenever possible (e.g. intra-DU), without reset, with the target cell to avoid data loss and the additional delay of data recovery. Further, security is not updated in Rel-18 LTM.

Layer 2 mobility (LTM) can offer improvements in handover latency and interruption time compared to Layer 3 based mobility. However, LTM as introduced in Rel-18 also has a number of limitations compared to Layer 3 mobility. For example, LTM operation is only supported for mobility between cells of the same gNB. Depending on the deployment of the network this may significantly limit the opportunities to use LTM.

An LTM cell handover (which may also be called a cell switch) may follow the following procedure. First, the UE sends a measurement report message to the gNB, which decides to use LTM and initiates LTM candidate preparation. Subsequently, the gNB transmits an RRCReconfiguration message to the UE including the configuration of one or multiple LTM candidate target cells. The UE stores the configuration of LTM candidate target cell(s) and transmits a RRCReconfigurationComplete message to the gNB. When configured by the network, the UE can perform downlink (DL) synchronization and timing advance (TA) acquisition with candidate target cell(s) before receiving the LTM cell switch command. This procedure may be referred to as early synchronization. Then, the UE performs L1 measurements on the configured LTM candidate target cell(s), and transmits lower-layer measurement reports to the gNB. Based upon the measurement reports, the gNB decides to execute LTM cell switch to a target cell, and transmits a MAC control element (MAC-CE) triggering the LTM cell switch. The UE switches to the configuration of the LTM candidate target cell. Then, the UE performs random access procedure towards the target cell, if TA is not available, and indicates successful completion of the LTM cell switch towards the target cell.

It is noted that the subsequent LTM is supported by Rel-18. The subsequent LTM refers to LTM cell switch procedures between candidate cells without RRC reconfiguration by the network in between. For example, subsequent LTM can be done by repeating the early synchronization, LTM cell switch execution, and LTM cell switch completion steps without releasing other LTM candidate configurations after each LTM cell switch completion.

### Layer 3 handover

Layer 3 handover is a dynamic process that ensures uninterrupted connectivity for mobile devices as they transition across different cells or base stations within the network. Operating at the Network Layer of the OSI model, this handover is an element in maintaining a seamless user experience.

As a mobile device moves, the network initiates the handover process by considering various factors, including signal strength and quality. Once a decision to handover is made, the network establishes communication with the target cell or base station. This involves negotiating parameters such as frequency and modulation scheme to facilitate a smooth transition.

Layer 3 handovers aim to maintain IP address continuity for the mobile device. This ensures that ongoing communication sessions are not disrupted during the handover. Handover signaling messages are exchanged between the mobile device and the network, for instance following protocols defined in 5G standards, such as those outlined in 3GPP specifications. In particular, in layer 3 handover, a serving cell change is triggered by L3 measurements and is done by RRC signalling triggered Reconfiguration with Synchronisation for change of PCell and PSCell, as well as release/add for SCells when applicable. All cases involve complete L2 (and L1) resets.

Security is paramount throughout the handover process. Authentication and encryption mechanisms are employed to safeguard the communication between the mobile device and the network, maintaining the integrity and confidentiality of data.

For this purpose, a layer 3 handover process between different base stations (e.g. inter-gNB handovers) requires re-keying of a session key K_{gNB} that is to be used for encrypted communication. Re-keying refers to the process of updating or renegotiating security keys to maintain a secure communication session between a mobile device and the network.

### Session Key Usage in wireless communication networks

Session keys in wireless communication networks like 5G networks serve as cryptographic keys that are dynamically generated and used for securing communication sessions between a user device and the network infrastructure. These keys are established during the authentication and key agreement (AKA) process, which verifies the identities of both the device and the network before securely exchanging session keys.

Once established, session keys are primarily used for encrypting and decrypting data transmitted between the device and the network. This encryption ensures that the data remains confidential and protected from eavesdropping or interception by unauthorized parties. Session keys also play role in maintaining data integrity, ensuring that transmitted data is not altered or tampered with during transit.

In 5G networks, session keys typically follow a hierarchical key structure. Higher-level keys, such as root keys, are securely stored and managed by network entities like the authentication server. Session keys are derived from these higher-level keys, allowing for efficient key management and minimizing the impact of a compromised key.

Specifically, in 5G wireless communication networks, a session key K_{gNB} used by a user equipment and/or a base station may be used to derive four keys (K_{UPenc}, K_{UPint}, K_{RRCenc}, and K_{RRCint}) for protecting traffic between a UE and a base station. Details thereof can be found, for instance, in 3GPP TS 33.501 V18.4.0 "3rd Generation Partnership Project; Technical Specification Group Services and System Aspects; Security architecture and procedures for 5G systems (Release 18), in particular section 6.

To enhance security, session keys may be periodically refreshed or updated. This key refreshment process helps mitigate the risks associated with key compromise or cryptographic attacks.

Furthermore, session keys in wireless communication networks contribute to forward secrecy, ensuring that even if an attacker manages to compromise a session key, they cannot decrypt past communications that were encrypted using different keys. This property helps protect the confidentiality of historical data and enhances the overall security of the network.

Note that the term forward secrecy mentioned above should not be confused with the term forward security. With forward security, knowing an old session key does not reveal any future keys. In 3GPP TS 33.501 v18.4.0 "3rd Generation Partnership Project; Technical Specification Group Services and System Aspects; Security architecture and procedures for 5G system (Release 18)", December 2023, section 3.1, it is described that in the context of K_{gNB} key derivation, forward security refers to the property that, for a gNB with knowledge of a K_{gNB}, shared with a UE, it is computationally infeasible to predict any future K_{gNB} that will be used between the same UE and another gNB. More specifically, n hop forward security refers to the property that a gNB is unable to compute keys that will be used between a UE and another gNB to which the UE is connected after n or more handovers (n=1 or more).

### Security handling for layer 3 handover

As a mobile device, e.g. a UE, moves and the network decides to initiate a Layer 3 handover, the security context needs to be maintained. However, due to the change in base station, e.g. gNB, the encryption keys may need to be updated to ensure the ongoing security of the communication.

Re-keying involves the generation of new cryptographic keys for securing the communication session. This process is initiated during the handover to establish a fresh set of keys that will be used for encrypting and decrypting data exchanged between the mobile device and the network.

Once the new keys are generated, they need to be securely distributed to both the mobile device and the network elements involved in the communication. This distribution ensures that all parties are synchronized with the updated keys, preventing any potential security vulnerabilities.

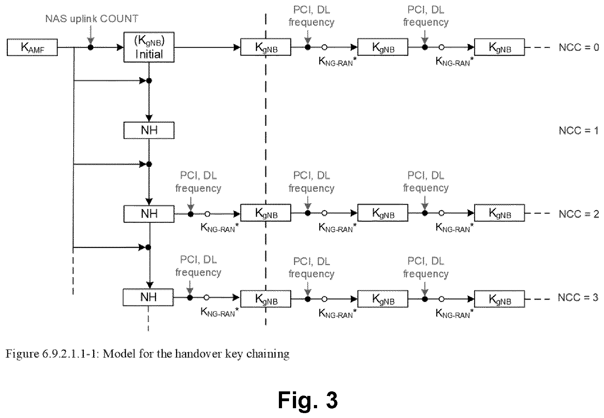

**Fig.** 3 is a diagram explaining the processes of horizontal and vertical key derivation. Details on the derivation scheme can be found, for instance, in 3GPP TS 33.501 V18.4.0 "3rd Generation Partnership Project; Technical Specification Group Services and System Aspects; Security architecture and procedures for 5G systems (Release 18), in particular section 6.9.3.2, from which Fig. 3 originates.

There are two modes for derivation of a new session key, namely horizontal and vertical key derivation. The device performing the session key derivation may hold one or more parameter pairs for session key derivation. Said parameter pairs include a next hop, NH, parameter and an associated NH chaining counter, NCC. A new session key may be derived using either an unused NH parameter (vertical key derivation) or the current session key K_{gNB} (horizontal key derivation). In both cases, the target PCI (Physical Cell Identifier) and the frequency of the target cell (ARFCN-DL; Absolute Radio Frequency Channel Number-Downlink) are used as further inputs. That is, horizontal key derivation uses (K_{gNB}, target PCI and ARFCN-DL) as inputs for derivation of the new session key, whereas vertical key derivation uses (NH, target PCI and ARFCN-DL) as inputs. The vertical key derivation process is illustrated by the vertical path on the left hand side of Fig. 3. The horizontal key derivation is illustrated by horizontal paths in Fig. 3.

Each key chain is associated with an NCC, which may be used to indicate an entity that is to derive a new session key, how said session key is to be derived. In a case where an NCC indicating the session key derivation procedure is associated with an unused (i.e. not previously used for key derivation) NH parameter, vertical key derivation is performed. On the other hand, if NCC is associated with an NH parameter that has already been used for key derivation, horizontal key derivation is performed. The processes related to vertical key derivation and the processes related to horizontal key derivation are separated in Fig. 3 by a vertical dashed line.

Horizontal key derivation cannot provide forward security, in contrast to vertical key derivation.. In the case of horizontal key derivation, if an attacker learns the old session key, he may be enabled to derive all subsequent keys (that are derived using horizontal key derivation). To the contrary, the attacker is not aware of the association of NCC to NH parameters and, hence, cannot derive a new session key. It is thus desirable to use vertical key derivation over horizontal key derivation, which may be possible as long as unused NH parameters {NH, NCC} parameter pairs are available. A session key K_{gNB} may be indicated between gNBs using an intermediate session key K_{NG-RAN}*, that may be included in a handover request transmitted between the gNBs.

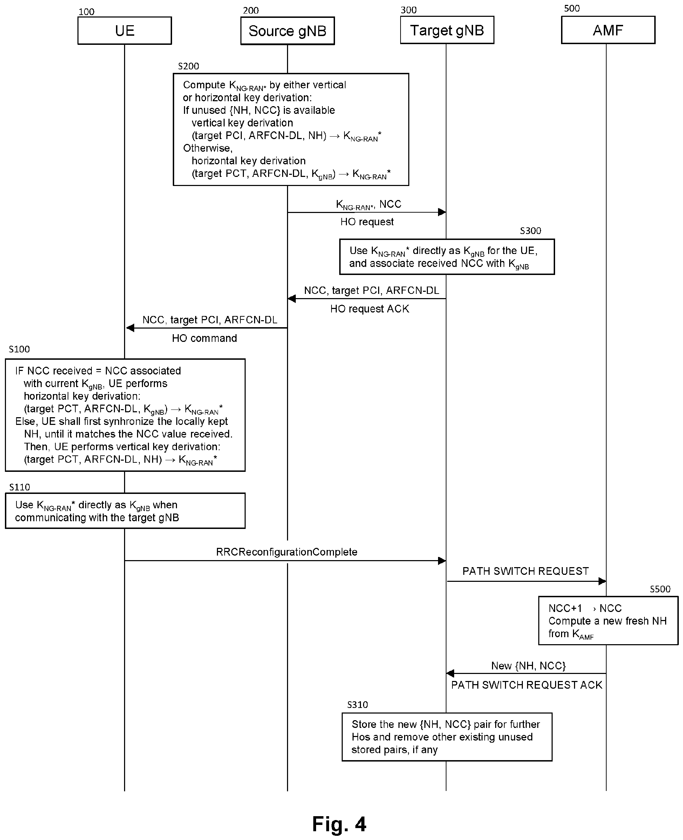

**Fig. 4** illustrates the steps of a method for security key handling in a layer 3 handover process for a handover of a UE 100 from a first base station (Source gNB) 200 to a second base station (target gNB) 300. In step S200, the source gNB 200 first computes the intermediate session key K_{NG-RAN}* by either horizontal or vertical key derivation. If there is an unused parameter pair {NH, NCC}, vertical key derivation is performed using (NH, target PCTI, ARFCN-DL) as input parameters. Otherwise, i.e. when there is no unused pair {NH, NCC} available, horizontal key derivation is performed. The source gNB 200 then transmits a handover (HO) request to the target gNB 300, the HO request including the K_{NG-RAN}* and NCC used for key derivation. In step S300, the target gNB 300 uses the transmitted K_{NG-RAN}* directly as the session key K_{gNB} for the upcoming communication with the UE 100. The received NCC is associated with K_{gNB}. In a HO request acknowledgement (HO request ACK), the target gNB 300 transmits a container including NCC, target PCI and ARFCN-DL to the source gNB 200 that forwards the container in a HO command to the UE 100. In step S100, the UE 100 substantially performs the same processing as the source gNB 200 in step S200 to derive the session key K_{NG-RAN}*. Specifically, if the received NCC is equal to the NCC associate with the current session key K_{gNB}, the UE 100 performs horizontal key derivation to obtain K_{NG-RAN}*. On the other hand, if the received NCC does not match the NCC associated with the current K_{gNB}, the UE 100 synchronizes the locally kept NH until it matches the NCC parameter received. Such computation process follows, for example, the function defined in Annex A.10 in 3GPP TS 33.501 v18.4.0 "3rd Generation Partnership Project; Technical Specification Group Services and System Aspects; Security architecture and procedures for 5G system (Release 18)", December 2023. Then, the UE 100 performs vertical key derivation using (NH, target PCI, ARFCN-DL) as inputs to derive the intermediate session key K_{NG-RAN}*. In step S110, the UE 100 uses the derived intermediate session key K_{NG-RAN}* directly as the session key K_{gNB} to communicate with the target gNB 300. For instance, the UE 100 transmits an RRCReconfigurationComplete message to the target gNB 300, which, in response thereto, transmits a PATH SWITCH REQUEST to AMF 500. AMF 500 increases NCC by 1 in step S500 and computes a new NH from the AMF key K_{AMF}. For future key derivations, AMF 500 subsequently transmits a parameter pair including the increased NCC parameter and the new NG parameter {NH, NCC} to the target gNB 300, which stores the received parameter pair in step S310 for future handovers.

### Conditional handover (CHO)

A Conditional Handover (CHO) is defined as a handover that is executed by the UE when one or more handover execution conditions are met. The UE starts evaluating the execution condition(s) upon receiving the CHO configuration, and the UE stops evaluating the execution condition(s) once a handover is executed (legacy handover or conditional handover execution).

The Condition Handover will contain information regarding the CHO configuration and 3GPP Specifications has defined the following principles for CHO: (i) The Candidate gNB(s) or the Potential Target gNB(s) provide the CHO configuration; (ii) the Source gNB provides the execution condition(s) to the UE on when to trigger CHO. The execution condition may consist of one or two trigger condition(s). Only a Single Reference signal type is supported for CHO and at most two different trigger quantities (e.g. RSRP and RSRQ, RSRP and SINR, etc.) can be configured simultaneously for the evaluation of CHO execution conditions of a single candidate cell. If a UE is configured with CHO Configuration and before the CHO execution condition is satisfied another HO Command is received from the gNB, then UE will trigger HO based on the HO Command received and will not wait for any of the CHO Conditions to satisfy.

There may be no difference in security key handling in a CHO process as compared to the regular HO, as illustrated in Fig. 4. Specifically, the source gNB 200 may calculate multiple K_{NG-RAN}* intermediate session keys, each for one CHO candidate cell. Subsequently, the source gNB 200 transmits a HO request to one or more candidate gNBs 300, including the respective K_{NG-RAN}* and corresponding NCC. After admission control, the candidate gNB(s) transmit an HO handover ACK including the container with (NCC, candidate PCT, ARFCN-DL) to the source gNB, which forwards the containers in an RRCReconfiguration message to UE 100. The RRCReconfiguration message may further include the CHO execution conditions, i.e. the conditions to be met for the UE 100 to perform a HO process. In the CHO candidate cell configuration, the UE 100 is aware of the NCC, which is used to derive the intermediate session key K_{NG-RAN}*. The UE 100 continuously evaluates the CHO conditions and, once the conditions are met, the UE 100 performs a HO process to the selected candidate cell using respective intermediate session key K_{NG-RAN}* directly as the new session key K_{gNB}. After successful completion of the HO, the UE releases the stored CHO configuration and the source gNB 200 transmits a HO CANCEL message to the other candidate gNB(s) 300 to indicate cancellation of the CHO for the UE 100. That is, CHO allows for HO of the UE to one of a plurality of candidate gNBs 300. Afterwards, the CHO configurations are discarded at the other candidate gNBs 300 (i.e. the candidate gNBs 300 other than the target gNB 300).

### Inter-base station layer 2 mobility (inter-gNB LTM)

As described in section *Layer 2 Mobility (LTM)* above, LTM cell switch as in Rel-18 (that is the latest release by 3GPP) only supports cell switch within the same gNB (same CU). Such a case does not require re-keying of K_{gNB} However, depending on the deployment of the network, this may significantly limit the opportunities to use LTM. By enabling LTM operation between cells of different gNBs (e.g. inter-CU), the network may be able to gain the benefits of LTM for a far greater number of handovers. Therefore, supporting inter-gNB LTM will be a topic for future Rel-19 work. How an inter-gNB LTM cell switch might be implemented remains an open design at the moment. More importantly, for inter-gNB cell switch, a new K_{gNB} would need to be derived to be used in the target gNB. This imposes further challenges into the design.

The present disclosure addresses a situation where a UE 100 is to perform one or more subsequent inter-gNB cell switches with re-keying of K_{gNB} to be used in the target gNB. This is achieved without RRC reconfiguration by the network in between. Hence, the merit of short latency by performing LTM instead of L3 handover (that requires RRC Reconfiguration with Synchronisation) may still hold, even in case of inter-gNB cell switch.

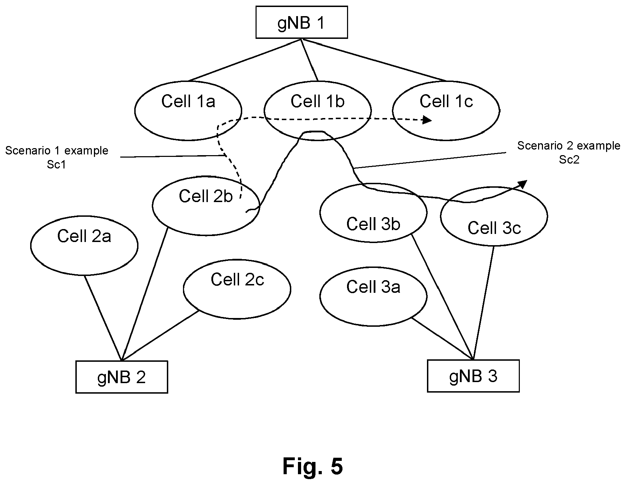

**Fig. 5** illustrates two exemplary scenarios Sc1 and Sc2 of cell switches performed by a UE 100 (not shown). In a first Scenario Sc1, the UE 100 transitions, as indicated by the dashed arrow, from cell 2b served by gNB2 to cell 1a served by gNB1. Subsequently, the UE 100 transitions to cell 1b of gNB1 and, again to cell 1c of gNB1. That is, in Sc1, the UE 100 first performs an inter-gNB cell switch, followed by two intra-gNB cell switches. In a second Scenario Sc2, the UE 100 transitions, as indicated by the solid arrow, from cell 2b served by gNB2 to cell 1b served by gNB1. Subsequently, the UE 100 transitions to cell 3b of gNB3 and, again to cell 3c of gNB3. That is, in Sc2, the UE 100 first performs an inter-gNB cell switch, followed by another inter-gNB cell switch, again followed by an intra-gNB cell switch. That is, both scenarios Sc1 and Sc2 include a mixture of inter-gNB and intra-gNB cell switches, wherein, in contrast to Sc2, only the first cell switch (initial cell switch after LTM is configured) of Sc1 is an inter-gNB cell switch.

### Embodiments

The present disclosure addresses a situation where a user equipment, UE is to perform an LTM cell switch, and especially an LTM inter-gNB cell switch.

In the following, UEs, base stations, and procedures will be described for the new radio access technology envisioned for the 5G mobile communication systems, but which may also be used in LTE mobile communication systems, 6G mobile communication systems and other wireless or wired communication system. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the UE and the base station is typically standardized and may be defined by different layers, such as PHY, MAC, RRC etc. (see above background discussion).

In the following embodiments, the use of a session key for communication with a UE or a base station includes the derivation of lower level session keys from said session key, wherein the derived lower level session keys (e.g. K_{UPenc}, K_{UPint}, K_{RRCenc}, K_{RRCint}) are used for protecting traffic transmitted to/from the UE or base station.

The present disclosure relates to a UE, a base station, a base station system and methods of a UE, a base station, and a base station system that address LTM inter-gNB cell switches.

### Embodiment 1

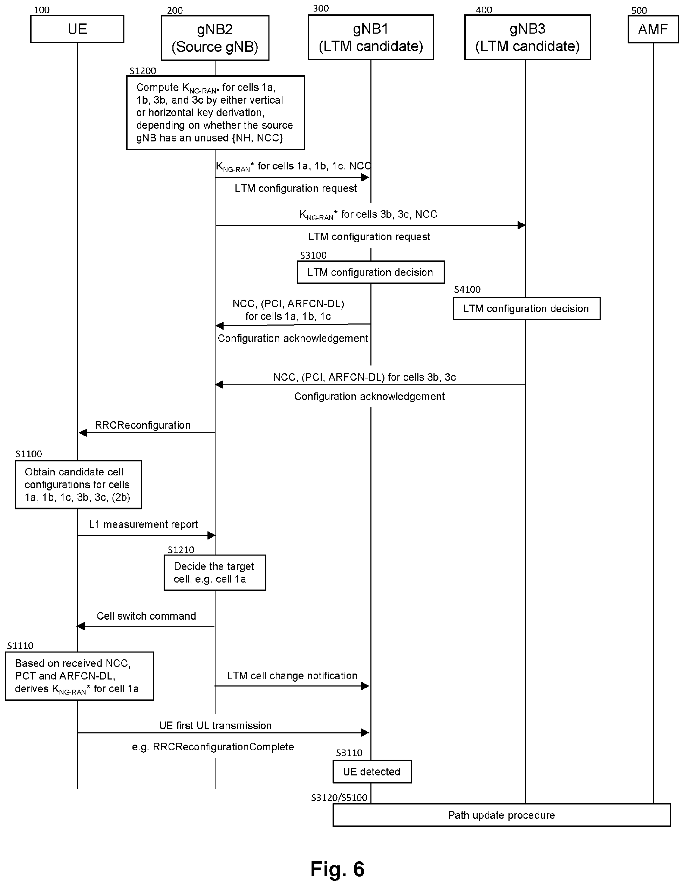

**Fig. 6** illustrates an overview of a method for inter-gNB LTM cell switch process according to a first embodiment. In step S1200, the source gNB, gNB2 (since this gNB is currently serving the UE 100 at this moment, it thus can be referred to as current serving gNB) 200 decides on the candidate cells for LTM. For example, cells 1a, 1b, 1c of LTM candidate gNB1 300, and cells 3b and 3c of LTM candidate gNB3 400 (cf. Fig. 5) are determined as candidate cells for the UE 100. Then, the source gNB (gNB2) 200 prepares multiple intermediate session keys K_{NG-RAN}*, each for one of the candidate cells. This may be performed either by vertical or by horizontal key derivation, depending on whether or not in gNB2 200 there is an unused pair of key derivation parameters {NH, NCC}. Subsequently, gNB2 200 transmits an LTM configuration request to a first candidate gNB (gNB1) 300 and an LTM configuration request to a second candidate gNB (gNB3) 400. Each of the LTM configuration requests includes the respective K_{NG-RAN}* intermediate session key derived for respective candidate cell. In steps S3100 and S4100, each of the candidate gNBs 300 and 400 performs decision processing (LTM configuration decision) and transmits a respective configuration acknowledgement message to the source gNB (gNB2) 200. The configuration acknowledgement may include the NCC, the PCI, and ARFCN-DL for respective candidate cells. That is, gNB1 300 transmits, in the configuration acknowledgement, said parameters for candidate cells 1a, 1b, and 1c. Similarly, gNB3 400 transmits respective parameters for candidate cells 3b and 3c, in its configuration acknowledgement, to the source gNB (gNB2) 200. The gNB2 200 forwards the packets including the parameters for each candidate cell to the UE 100 in an RRCReconfiguration message. In step S1100, the UE 100 obtains said candidate cell configurations for cells 1a, 1b, 1c, 3b, and 3c. When forwarding the containers to UE 100 by gNB2 200, gNB2 200 may decide to include its own NCC, PCI, ARFCN-DL so as to configure the current serving cell as a candidate cell, which may be used for subsequent cell switches.

That is, the UE 100 may obtain, in step S1100, a cell candidate configuration for the current serving cell, which is, in the scenarios illustrated in Fig. 5, cell 2b of gNB2 200. Subsequently, the UE 100 provides an L1 measurement report to gNB2 200, which may decide, in step S1210, on a target cell of a target gNB the UE 100 should switch to (for example, cell 1a of gNB1 300). Accordingly, a cell switch command is transmitted by gNB2 200 to the UE 100, wherein the cell switch command includes an indication of a target cell of one of the candidate gNBs 300, 400 (which becomes the target gNB for this round of cell switch, for example, gNB1 300). A corresponding cell change notification is transmitted to the decided target gNB, i.e., gNB1 300 for this round of cell switch. Based on the NCC value, the cell PCI, and the ARFCN-DL, the UE 100 derives in step S1110 an intermediate session key K_{NG-RAN}* for the target cell 1a and transmits a first UL transmission to the target gNB1 300. The first UL transmission may be, for example, an RRCReconfigurationComplete message. By receiving the first UL transmission from the UE 100, the target gNB1 300 detects the UE 100 in step S3110 and performs in collaboration with AMF 500 a path update procedure so as to become the serving gNB (for a subsequent round of cell switch), including an update of the NCC/NH parameters, similarly to the processing of steps S500 and S310 of Fig. 4.

According to the embodiment 1, session keys are derived for different LTM candidate cells based on the same parameters, namely K_{gNB} (horizontal derivation) or NH (vertical derivation) in the source gNB2 200. Although a subsequent cell switch to a different gNB may violate a key chaining principle, according to which a key for a new cell shall be derived from fresh parameters (i.e. K_{gNB} of a current serving gNB for horizontal derivation, or fresh NH parameter for vertical derivation), this embodiment is still applicable at least to a scenario similar to Sc1 of Fig. 5, wherein subsequent cell switches are performed between cells of a single gNB. That is, after a first inter-gNB cell switch, the same key may be reused for subsequent intra-gNB cell switches, since K_{gNB} does not need to be updated for intra-gNB HOs.

### Embodiments 2 to 4

Methods for LTM cell switch according to embodiments 2 to 4 are provided. In the embodiments 2 to 4 to be described in detail further below, a new session key to be used for communication with a target gNB is derived in a subsequent LTM inter-gNB cell switch either by the gNB initiating the cell switch (embodiments 2 and 3) or by the target gNB (embodiment 4).

With this approach, for every subsequent LTM inter-gNB cell switch, the session key to be used for communication between the UE and the target gNB is derived from fresh/unused parameters. Specifically, the new session key is derived either from the current session key K_{gNB} of the current serving gNB (horizontal key derivation) or from an unused NH parameter (vertical key derivation). In particular, this is achieved without an RRC reconfiguration.

Embodiment 4 provides the additional advantage that the source gNB is not able to predict a future K_{gNB} that will be used between the served UE and another gNB, which may further improve the communication security.

### Embodiment 2

In embodiment 2, the UE maintains a list of parameter pairs, wherein each parameter pair includes a next hop parameter NH and an NH chaining counter NCC. Each parameter is associated with one of at least on candidate base station, e.g. a candidate gNB. The UE 100 receives a cell switch command including an indication of a target cell of a target base station, wherein the target base station is one of the at least one candidate base station. The UE 100 then derives a session key using a parameter pair associated with a serving base station and uses the derived session key for communication with the target base station.

For example, the list of parameter pairs may be received from a serving base station.

The session key may be derived by performing either vertical session key derivation or horizontal session key derivation, depending on whether there is an unused parameter pair associated with the serving base station.

Further, a (first) base station may transmit a mobility configuration request to at least one candidate base station and receives, from each of the at least one candidate base station, a first list of parameter pairs, wherein each parameter pair includes a next hop, NH, parameter and an NH chaining counter, NCC. The base station then associates each received parameter pair with the respective candidate base station and transmits a second list of parameter pairs to the UE, wherein the second list of parameter pairs includes each received parameter pair in association with the respective candidate base station.

That is, the second list of parameter pairs is the list of parameter pairs to be stored by the UE for derivation of a session key to be used for communication with a target base station.

Still further, in embodiment 2, a second base station may be provided, wherein the first base station or the second base station is currently serving the UE. For example, the first base station may have transmitted the second list of parameter pairs and a first LTM cell switch from a cell served by the first base station to a cell served by the second base station may have already been performed, such that UE has received the list of parameter pairs from the first base station, but the second base station is the current serving base station. The serving base station may derive a session key for a target cell of a target base station, the target base station being one of the at least one candidate base station. The serving base station then transmits a cell switch command to the UE, the cell switch command including an indication of the target cell of the target base station, and transmits a cell change notification including an indication of the session key to the target base station for communication with the UE. It is noted that the target base station may be the first base station when an LTM cell switch has already occurred from the first base station to the second base station.

The target base station (the first base station or another base station, if the second base station is serving the UE, or the second base station or another base station, if the first base station is serving the UE) may receive the cell change notification and use the session key indicated in the cell change notification for communication with the UE.

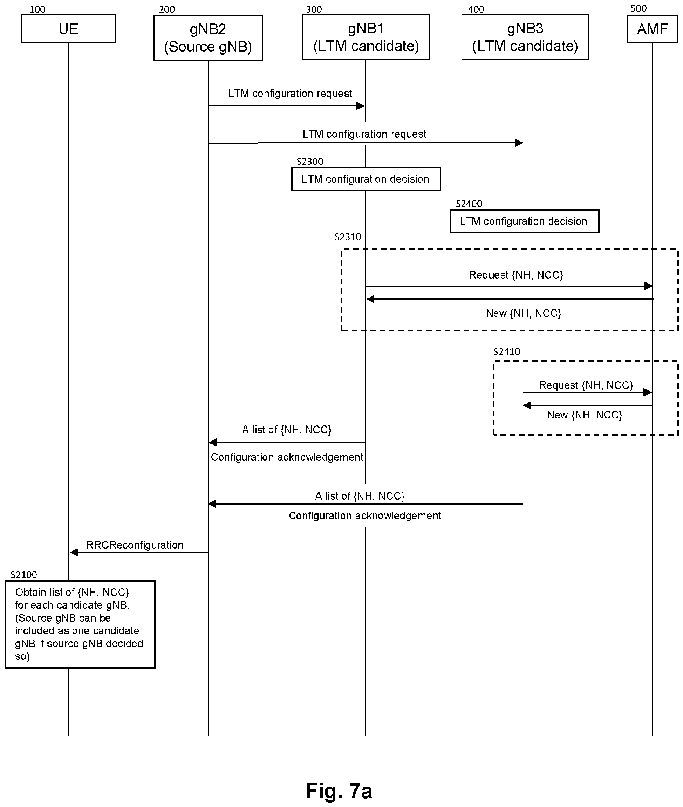

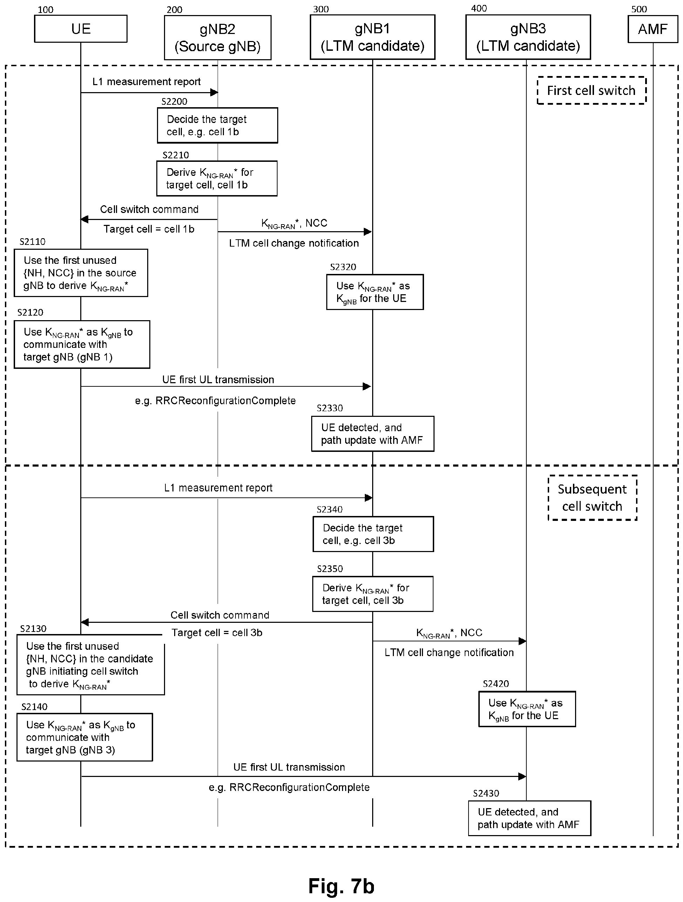

**Fig. 7a** **and** **7b** illustrate a specific implementation of the embodiment 2, wherein Fig. 7a illustrates a preparation phase during which the UE 100 is provided with the list of parameter pairs, and **Fig. 7b** illustrates two LTM cell switch procedures, namely from the base station that provided the list of parameter pairs to the UE 100 to another base station (first cell switch), and from said another base station to still another base station (subsequent cell switch).

With reference to **Fig. 7a****,** first, the source base station gNB2 200 (also the current serving gNB for this round of cell switch) transmits an LTM configuration request message to a first candidate base station gNB1 300 and transmits an LTM configuration request message to a second candidate base station gNB3 400. However, the present disclosure is not limited to the transmission of LTM configuration requests to two candidate base stations, and the serving base station gNB2 may transmit an LTM configuration request to one candidate base station or more than two candidate base stations. Each of the candidate base stations 300, 400 (i.e., gNB1 300, gNB3 400) subsequently performs an LTM configuration decision in steps S2300 and S2400, respectively, and transmits a respective Configuration acknowledgement to the serving base station 200 (i.e., gNB1 200). Each of the Configuration acknowledgement messages includes a list of parameter pairs {NH, NCC} (a first list of parameter pairs). It is noted that said first list of parameter pairs may include one or more parameter pairs {NH, NCC}. However, the first list may as well be empty. That is, the first list of parameter pairs is not necessarily required to include actual parameters {NH, NCC}. Instead of transmitting an empty list, an indicator may be transmitted, indicating that no parameter pairs {NH, NCC} are provided by respective candidate base station. As illustrated by the dashed rectangle, before transmitting the first list of parameter pairs, one or more of the candidate base stations 300, 400 may transmit a request to AMF 500 requesting one or more new parameter pairs {NH, NCC} in steps S2310 and S2410, respectively. In response thereto, the candidate base stations may receive, from AMF 500, respective new parameter pair(s) {NH, NCC}. After having received the first list of parameter pairs, the source base station gNB2 200 transmits an RRCReconfiguration message to the UE 100. The RRCReconfiguration message includes a second list of parameter pairs {NH, NCC}, wherein each of the parameter pairs {NH, NCC} is associated with respective candidate base station.

The second list may include each entry of each first list received from the candidate base station(s), wherein each entry of the second list is associated with the respective candidate base station. In a case where a first list received from a candidate base station is empty or an indicator is received from said candidate base station indicating that no parameter pairs {NH, NCC} are provided by respective candidate base station, the second list may either not include any parameter pairs {NH, NCC} associated with said candidate base station, or include an indicator associated with said candidate base station, indicating that no parameter pairs {NH, NCC} are associated with said candidate base station.

For example, when the source gNB2 200 receives a list l1 from gNB1 300, including two parameter pairs, i.e. l1={{NH1, NCC1}, {NH2, NCC2}}, and a list l2 from gNB3 400, including one parameter pair, i.e. l2={{NH3, NCC3}}, the second list may include each of the three parameter pairs in association with respective candidate base station. For example, the second list may be realized as {{NH1, NCC1, ID1}, {NH2, NCC1, ID1}, {NH3, NCC3, ID3}}, wherein in this list, the parameters ID1 and ID3 are identifiers indicating the candidate base stations gNB1 300 and gNB3 400, respectively.

In another example, when the source gNB2 200 receives a list l1 from gNB1 300, including two parameter pairs, i.e. l1={{NH1, NCC1}, {NH2, NCC2}}, and an empty list l2 or an indicator indicating that no parameter pairs are provided from gNB3 400, the second list may include each of the two parameter pairs in association with respective candidate base station. For example, the second list may be realized as {{NH1, NCC1, ID1}, {NH2, NCC1, ID1}}, wherein in this list, the parameter ID1 is an identifier indicating the candidate base stations gNB1, respectively. Alternatively, the second list may be realized as {{NH1, NCC1, ID1}, {NH2, NCC2, ID1}, {NO, ID3}}, wherein in this list, the parameters ID1 and ID3 are identifiers indicating the candidate base stations gNB1 300 and gNB3 400, respectively, and the indicator NO indicates that no parameter pairs are provided.

However, the present disclosure is not limited to these examples, and the second list may be structured differently, provided that it indicates the parameter pairs received from the candidate base station(s) in association with respective candidate base station(s). For example, the second list could be a "conceptual" list that is used to refer to the union of multiple lists, where each of the multiple lists corresponds to one candidate base station. In this case, each of the multiple lists can be configured within the respective candidate cell configuration, and therefore configured (or stored) in different information elements (lEs). In other words, the second list may be data including the parameter pairs associated with respective candidate base station. The data may be in the form of certain data portions that may be transmitted, stored, indicated or processed separately.

It is noted that the current serving base station gNB2 200 may decide to include a list of parameter pairs {NH, NCC} associated with itself (i.e. the serving base station gNB 2 200) as a candidate base station. This may facilitate a subsequent LTM inter-gNB cell switch with the (currently serving) base station gNB2 200 as a target base station. After having received the (second) list of parameter pairs {NH, NCC}, the UE 100 stores the list of parameter pairs in association with respective candidate base stations gNB1 300 and gNB3 400.

**Fig. 7b** illustrates two cell switches performed in the communication system, wherein in a first cell switch, the UE switches from the serving cell of gNB2 200 (source gNB) to one of the candidate base stations. In this example, the UE 100 switches to a cell of the candidate base station gNB1 300 (target gNB for this first cell switch). In a subsequent cell switch, an LTM cell switch is performed from base station gNB1 300 (current serving gNB for this round of cell switch) to another base station gNB3 (target gNB for this round of cell switch). However, the UE 100 may as well switch back to base station gNB2 200 (not shown). The first cell switch and the subsequent cell switch are indicated by two dashed rectangles.

In the following, the first cell switch is described in detail. After the UE 100 has transmitted an L1 measurement report to the serving base station for the first cell switch/source base station gNB2 200, the source base station gNB2 200 decides in step S2200 on a target cell. In this example, the source base station gNB2 determines that the UE 100 is to switch to cell 1b of candidate base station gNB1 300 (read in combination with Fig. 5). Subsequently, in step S2210, the source base station gNB2 200 derives an intermediate session key K_{NG-RAN}* for the target cell of the target base station (i.e. candidate base station gNB1 300). This may be performed either horizontally or vertically, as described further above, depending on whether an unused parameter pair {NH, NCC} is available. Then, the source base station gNB2 200 transmits a cell switch command to the UE 100, wherein the cell switch command includes an indication of a target cell (cell 1b) of one of the candidate base stations (gNB1 300). Further, an LTM cell change notification is transmitted by the source base station gNB2 200 to the target base station gNB1 300. The LTM cell change notification includes an indication of a session key (e.g. the derived intermediate session key K_{NG-RAN}*) and the NCC used for derivation of said session key. After having received the LTM cell change notification, the target base station gNB1 300 uses the received intermediate session key K_{NG-RAN}*as the session key K_{gNB} for communication with the UE 100 in step S2320. After having received the cell switch command, the UE 100 uses the first unused parameter pair {NH, NCC} associated with the source base station gNB2 200, to derive an intermediate session key K_{NG-RAN}* in step S2110 (vertical derivation). If an unused parameter pair {NH, NCC} associated with the source base station gNB2 200 is not available, the UE 100 determines the intermediate session key horizontally, i.e. based on the current K_{gNB}. In step S2120, the UE 100 decides to utilize the intermediate session key as a session key K_{gNB} to communicate with the target base station gNB1 300 and transmits a first UL transmission to the target base station gNB1 300. For example, an RRCReconfigurationComplete message may be transmitted as the first UL transmission. In step S2330, the target base station gNB1 300 detects the UE 100 and performs a path update with AMF.

In the following, the subsequent cell switch is described in detail. In this example of the subsequent cell switch, the base station gNB1 300 serves the UE 100 as a current serving base station and the cell switch is performed to another base station gNB3 400 as a target base station. However, in a different example, the gNB2 200 may be the target base station. Similarly to the first cell switch, the UE 100 transmits an L1 measurement report to the base station gNB1 300, and the base station gNB1 300 decides on the target cell for this round of cell switch. In this example, the base station gNB1 300 decides that the UE 100 shall switch to cell 3b of candidate base station gNB3 400 (read in combination with Fig. 5) in step S2340 and derives the intermediate session key K_{NG-RAN}* for the target cell 3b. Subsequently, similarly to the first cell switch, the current serving base station gNB1 300 transmits an LTM cell change notification to the target base station gNB3 400, including the derived intermediate session key K_{NG-RAN}* and the NCC used for derivation of said key. Further, the base station gNB1 300 transmits a cell switch command to the UE 100, including an indication of the target cell 3b of the target base station gNB3 400 to the UE 100. In step S2420, the target base station gNB3 400 decides to use the intermediate session key K_{NG-RAN}* as the session key K_{gNB} for communication with the UE 100. In step S2130, the UE 100, after having received the cell switch command, uses the first unused parameter pair {NH, NCC} associated with the base station gNB1 300 to derive the intermediate session key K_{NG-RAN}* (vertical derivation). If no unused parameter pair {NH, NCC} associated with the base station gNB1 300 is available, the intermediate session key is derived horizontally, using the current session key K_{gNB}. In step S2140, the UE 100 decides to use the derived intermediate session key K_{NG-RAN}* as the session key for communication with the target base station gNB3 400 and transmits a first UL transmission to the target base station gNB3 400, which may be, for example, an RRCReconfigurationComplete message. In step S2430, after having received the first UL transmission form the UE 100, the target base station gNB3 400 detects the UE 100 and performs a path update procedure with AMF 500.

### Embodiment 3

In embodiment 3, the UE 100 is not required to maintain a list of parameter pairs {NH, NCC}, as in embodiment 2. The UE 100 is indicated with an NCC value in a cell switch command and performed session key derivation depending on whether or not the NCC is associated with a current session key. Specifically, if the received NCC value is associated with the current session key, horizontal key derivation is performed using the current session key as input. On the other hand, when the NCC received is not associated with the current session key, the UE 100 synchronizes the locally kept NH parameter until it matches the received NCC value and performs vertical session key derivation.

According to the present embodiment, provided is a user equipment, UE 100 that receives a cell switch command including an indication of a target cell of a target base station, and an indication of a next hop chaining counter NCC. The UE 100 then derives a session key using the NCC indicated in the cell switch command and uses the derived session key for communication with the target base station.

Further provided is a base station that derives a session key for a target cell of a target base station using a next hop chaining counter NCC. The base station transmits a cell switching command to a user equipment UE. The cell switch command includes an indication of the target cell of the target base station, and an indication of the NCC. The base station further transmits a cell change notification to the target base station, wherein the cell change notification includes an indication of the session key and an indication of the NCC.

Further provided is a target base station receives the cell change notification and uses the session key indicated in the cell switch notification for communication with the UE.

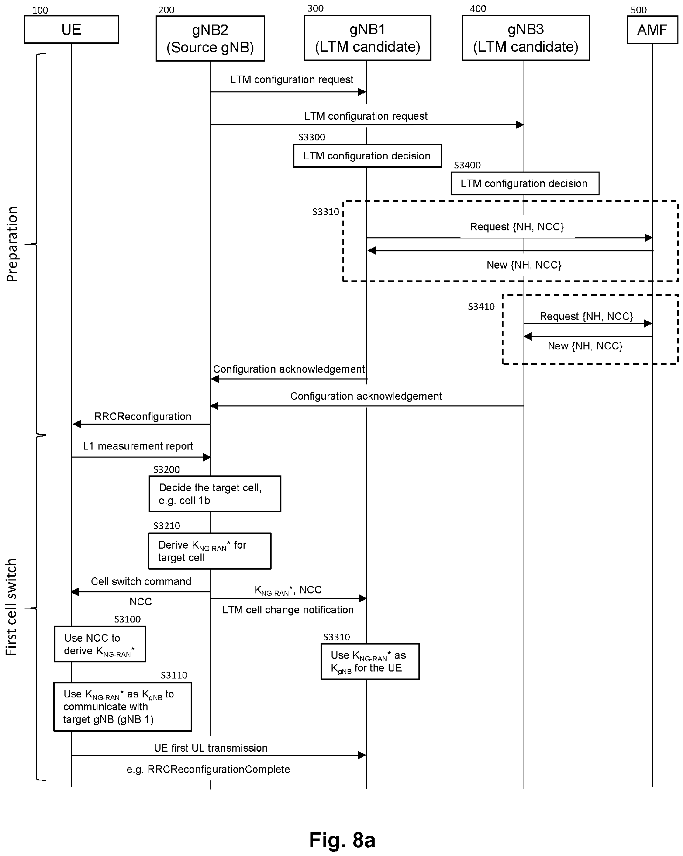

**Fig. 8a** illustrates a specific implementation of embodiment 3, wherein a preparation phase is illustrated in the upper portion of the figure, and a first cell switch operation is illustrated in the lower portion of the figure.

The operations performed in the preparation phase by the UE 100, the source base station gNB2 200, the candidate base stations gNB1 300 and gNB3 400, and the AMF 500 substantially correspond to the operations performed in the preparation phase described with reference to Fig. 7a for embodiment 2. The preparation phase of embodiment 3 differs from the preparation performed in embodiment 2 in particular in the configuration acknowledgement message respectively transmitted from the candidate base stations gNB1 300 and gNB3 400 to the source base station gNB2 200. In particular, the configuration acknowledgment message is not required to include the first list of parameter pairs {NH, NCC}. Further, the preparation phase of embodiment 3 differs from embodiment 2 in that the UE 100 does not obtain the second list of parameter pairs {NH, NCC} after having received the RRCReconfiguration message.

In a first cell switch operation indicated in the lower portion of the figure, the UE 100 transmits an L1 measurement report to the source base station gNB2 200. The source base station gNB2 200 then decides on the target cell in step S3200 (e.g. cell 1b of gNB1 300) and derives a session key K_{NG-RAN}* for the target cell in step S3210. Then, the source base station gNB2 200 transmits a cell switch command to the UE 100. The cell switch command includes an indication of the target cell of the target base station (in this example: cell 1b of base station gNB1 300) and an indication of the NCC value used for derivation if the session key K_{NG-RAN}*. Further, the source base station gNB2 200 transmits an LTM cell change notification to the target base station gNB1 300. The LTM cell change notification includes the derived session key K_{NG-RAN}* as well as the NCC used for derivation of said session key. In step S3310, the target base station determines to use the received session key K_{NG-RAN}* as the session key K_{gNB} for communication with the UE 100. In step S3100, the UE 100 uses the NCC indicated in the received cell switch command to derive a session key K_{NG-RAN}*. That is, similar to embodiment 2, the UE 100 performs either horizontal key derivation or vertical key derivation, depending on whether the received NCC value is associated with a current session key K_{gNB}. In step S3110, the UE 100 determines to use the derived session key K_{NG-RAN}* as a session key K_{gNB} for communication with the target base station gNB1 300 and transmits a fist UL transmission to the target base station gNB1 300. The subsequent procedure corresponds substantially to the procedure of embodiment 2, wherein the target base station gNB1 300 detects the UE 100 and performs path update with AMF 500.

It is noted that a subsequent cell switch, i.e. a cell switch from the base station gNB1 300 to another candidate base station may be performed in a similar or equal manner as the cell switch illustrated in Fig. 8a. In this respect, it goes without saying that base station gNB2 200 may be a (new) target base station and the UE 100 switches from a cell served by base station gNB1 to a cell served by base station gNB2 200.

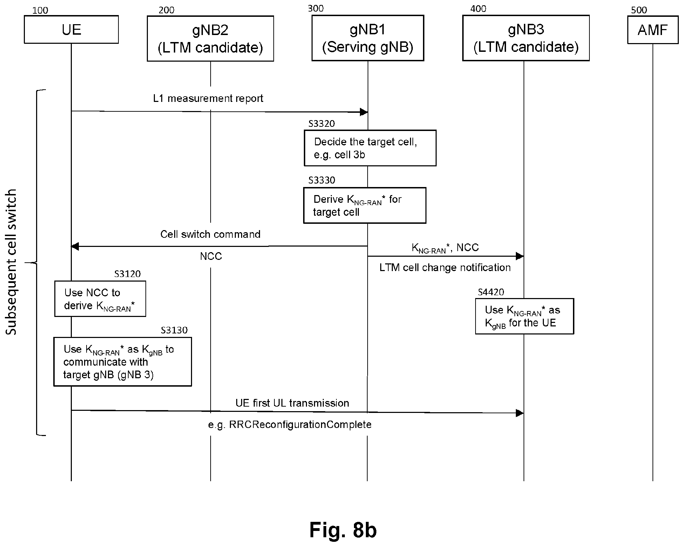

**Fig. 8b** illustrates a specific implementation of a subsequent cell switch according to embodiment 3.

In a subsequent cell switch operation indicated in Fig. 8b, gNB1 300, which was the target base station in the first cell switch, is the current serving base station in the illustrated subsequent cell switch. Accordingly, gNB2 200, which was the serving base station in the first cell switch, may, in a second cell switch, be a candidate base station.

The UE 100 transmits an L1 measurement report to the serving base station gNB1 300. The serving base station gNB1 300 then decides on the target cell in step S3320 (e.g. cell 3b of gNB3 400) and derives a session key K_{NG-RAN}* for the target cell in step S3330. Then, the serving base station gNB1 300 transmits a cell switch command to the UE 100. The cell switch command includes an indication of the target cell of the target base station (in this example: cell 3b of base station gNB3 400) and an indication of the NCC value used for derivation the session key K_{NG-RAN}*. Further, the serving base station gNB1 300 transmits an LTM cell change notification to the target base station gNB3 400. The LTM cell change notification includes the derived session key K_{NG-RAN}* as well as the NCC used for derivation of said session key. In step S4420, the target base station gNB3 400 determines to use the received session key K_{NG-RAN}* as the session key K_{gNB} for the upcoming communication with the UE 100. In step S3120, the UE 100 uses the NCC indicated in the received cell switch command to derive a session key K_{NG-RAN}*. That is, similar to embodiment 2, the UE 100 performs either horizontal key derivation or vertical key derivation, depending on whether the received NCC value is associated with a current session key K_{gNB}. In step S3130, the UE 100 determines to use the derived session key K_{NG-RAN}* as a session key K_{gNB} for communication with the target base station gNB3 400 and transmits a fist UL transmission to the target base station gNB3 400. The subsequent procedure corresponds substantially to the procedure of embodiment 2, wherein the target base station gNB3 400 detects the UE 100 and performs path update with AMF 500.

In a case where the subsequent cell switch is to be performed to a cell served by gNB2 200, that is, the source gNB involved in the preparation phase, the procedure corresponds to the procedure of the subsequent cell switch illustrated in Fig. 8b, wherein
(i) gNB2 200 is the target gNB,
(ii) the LTM cell change notification is transmitted from the serving gNB1 300 to the target gNB2 200,
(iii) the target gNB2 200 performs a step corresponding to step S4420 to derive the session key,
(iv) the UE 100 transmits the first UL transmission to the target gNB1 200, and
(v) the target gNB1 200 detects the UE 100 and performs path update with AMF 500.

It is noted that further subsequent cell switches may be performed accordingly.

In embodiment 3, the NCC value is transmitted via a cell switch command, which may be transmitted by MAC CE, which might not be protected. However, even if an attacker learns the NCC value transmitted in the cell switch command, he is not aware of the association of NCC with NH. Thus, the attacker, even with knowledge of the NCC value, cannot derive a session key that is to be used for communication between the UE 100 and the target base station.

### Embodiment 4

In embodiment 4, the UE 100 stores, similarly to embodiment 2, a list of parameter pairs {NH, NCC}, wherein each pair includes a next hop, NH, parameter and a NH chaining counter NCC, wherein each parameter pair is associate with a candidate base station for LTM cell switching. The present embodiment differs from embodiment 2 in that the UE 100 derives the session key using a parameter pair associated with a target base station rather than a parameter pair associated with the source base station.

That is, according to the present embodiment, a user equipment, UE, stores a list of parameter pairs, wherein each parameter pair includes a next hop, NH, parameter and an NH chaining counter, NCC, and each parameter pair is associated with one of at least one candidate base station. The UE receives a cell switch command including an indication of a target cell of a target base station, the target base station being one of the at least one candidate base station, Further, the UE derives a session key using a parameter pair associated with the target base station and uses the derived session key for communication with the target base station.

For example, the UE received the list of parameters from a serving base station.

The UE may derive the session key by performing either vertical session key derivation or horizontal session key derivation, depending on whether there is an unused parameter pair associated with the target base station.

Further, a base station according to the embodiment transmits a mobility configuration request to at least one candidate base station; and receives, from each of the at least one candidate base station, a first list of parameter pairs, wherein each parameter pair includes a next hop, NH, parameter and an NH chaining counter, NCC. Further, each received parameter pair is associated with the respective candidate base station. The base station transmits a second list of parameter pairs to a UE, wherein the second list of parameter pairs includes each received parameter pair in association with the respective candidate base station.

In a base station system, a first base station or a second base station is serving the UE as a serving base station. The first base station may be the base station that provided the second list of parameters to the UE and is serving the UE as a serving base station. However, a different base station (second base station), that is, a base station that did not provide the second list of parameter pairs to the UE may serve as a serving base station. This may be the case when a cell switch to the second base station has been performed after the UE has received the second list of parameter pairs. The serving base station transmits a cell switch command to the UE, wherein the cell switch command includes an indication of a target cell of a target base station, the target base station being one of the at least one candidate base station. The serving base station further transmits a cell change notification including an indication of a current session key to the target base station for derivation of a session key for communication with the UE. The target base station may be another base station, or, in a case where a cell switch to the second base station has already been performed, the target base station may be the first base station.

According to the embodiment, provided is a target base station that receives the cell change notification and derives the session key by performing either vertical session key derivation or horizontal session key derivation using the current session key indicated in the cell change notification, depending on whether there is an unused parameter pair associated with the target base station, The target base station then uses the derived session key for communication with the UE.

Further provided is a base station system including any combination of above-described base stations as well as a communication system further including the UE.

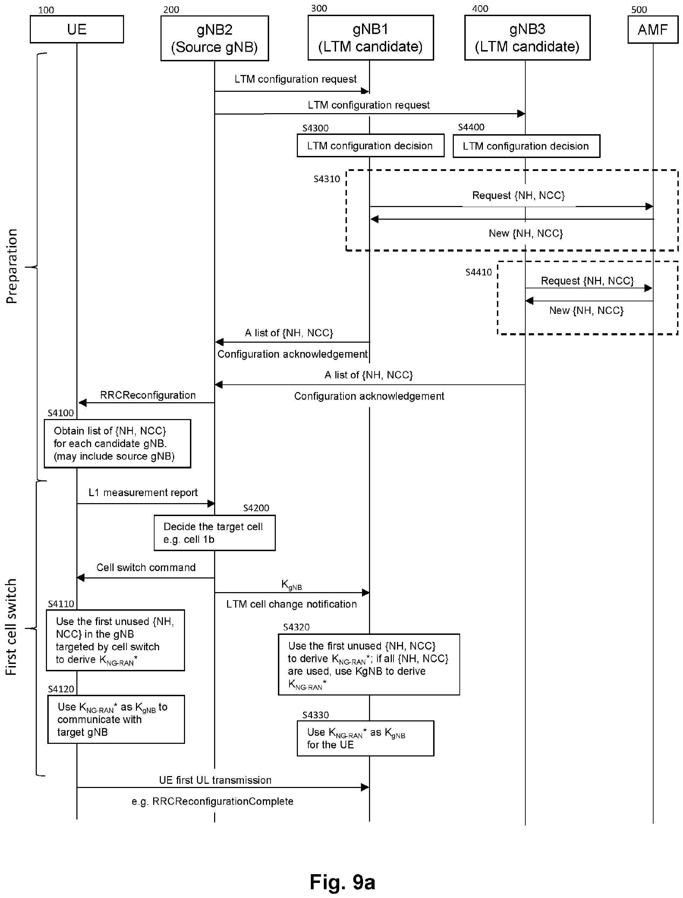

**Fig. 9a** illustrates a specific implementation of the present embodiment, a preparation phase is illustrated in the upper portion of the figure, and a first cell switch operation is illustrated in the lower portion of the figure.

The operations performed in the preparation phase by the UE 100, the source base station gNB2 200, the candidate base stations gNB1 300 and gNB2 400, and the AMF 500 substantially correspond to the operations performed in the preparation phase described with reference to Fig. 7a for embodiment 2, and a detailed description is therefore omitted.

In a first cell switch operation indicated in the lower portion of the figure, the UE 100 transmits an L1 measurement report to the source base station gNB2 200 which is the serving base station. The source base station gNB2 200 then decides on the target cell in step S4200 (for example, cell 1b of gNB1 300 is decided as the target cell). Then, the source base station gNB2 200 transmits a cell switch command to the UE 100. The cell switch command includes an indication of the target cell of the target base station (in this example: base station gNB1 300). Further, the source base station gNB2 200 transmits an LTM cell change notification to the target base station gNB1 300. The LTM cell change notification includes the current session key K_{gNB}. In step S4320, the target base station derives an intermediate session key K_{NG-RAN}* using either an unused parameter pair {NH, NCC} (vertical key derivation) or the received current session key K_{gNB} (horizontal key derivation) depending on whether there is an unused parameter pair {NH, NCC} available. In step S4330, the target base station gNB1 300 determines to use the derived session key K_{NG-RAN}* as the session key K_{gNB} for the upcoming communication with the UE 100. In step S4110, the UE 100 derives an intermediate session key K_{NG-RAN}* using either an unused parameter pair {NH, NCC} (vertical key derivation) associated with the target base station gNB1 300 or the current session key K_{gNB} (horizontal key derivation), depending on whether there is an unused parameter pair associated with the target base station gNB1 300. In step S4120, the UE 100 determines to use the derived intermediate session key K_{NG-RAN}* as the session key K_{gNB} to be used for communication with the target base station gNB1 300 and transmits a fist UL transmission to the target base station gNB1 300. The subsequent procedure corresponds substantially to the procedure of embodiment 2, wherein the target base station gNB1 300 detects the UE 100 and performs path update with AMF 500.

It is noted that a subsequent cell switch, i.e. a cell switch from the base station gNB1 300 to another candidate base station may be performed in a similar or equal manner as the cell switch illustrated in Fig. 9a. In this respect, it goes without saying that base station gNB2 200 may be the (new) target base station and the UE 100 switches from a cell served by base station gNB1 300 to a cell served by base station gNB2 200.

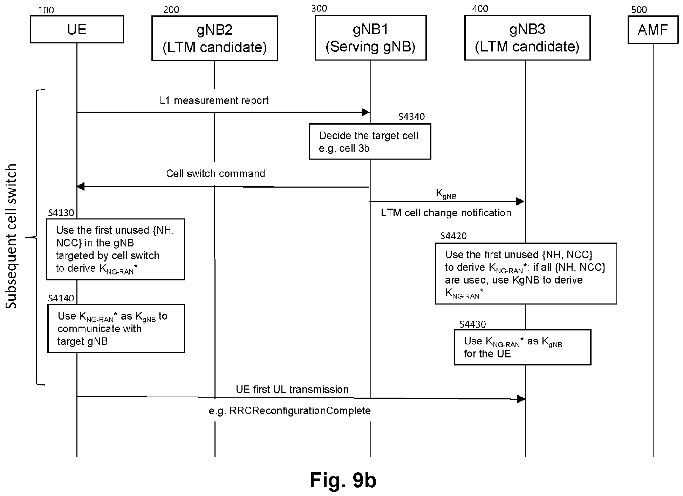

**Fig. 9b** illustrates a specific implementation of a subsequent cell switch according to embodiment 4.

In a subsequent cell switch operation indicated in Fig. 9b, gNB1 300, which was the target base station in the first cell switch, is the serving base station in the illustrated subsequent cell switch. Accordingly, gNB2 200, which was the source base station in the first cell switch, may, in a second cell switch, be a candidate base station.

In particular, in the subsequent cell switch, a different base station (e.g. gNB3 400), being the target base station of this round of cell switch, performs derivation of the session key than in the first cell switch (where the key derivation is performed, e.g. by gNB1 300).

In a subsequent cell switch operation indicated in Fig. 9b, the UE 100 transmits an L1 measurement report to the serving base station gNB1 300. The serving base station gNB1 300 then decides on the target cell in step S4340 (for example, cell 3b of gNB3 400 is decided as the target cell). Then, the serving base station gNB1 300 transmits a cell switch command to the UE 100. The cell switch command includes an indication of the target cell of the target base station (in this example: base station gNB3 400). Further, the serving base station gNB1 300 transmits an LTM cell change notification to the target base station gNB3 400. The LTM cell change notification includes the current session key K_{gNB}. In step S4420, the target base station gNB3 400 derives an intermediate session key K_{NG-RAN}* using either an unused parameter pair {NH, NCC} (vertical key derivation) or the received current session key K_{gNB} (horizontal key derivation) depending on whether there is an unused parameter pair {NH, NCC} available. In step S4430, the target base station gNB3 400 determines to use the derived session key K_{NG-RAN}* as the session key K_{gNB} for the upcoming communication with the UE 100. In step S4130, the UE 100 derives an intermediate session key K_{NG-RAN}* using either an unused parameter pair {NH, NCC} (vertical key derivation) associated with the target base station gNB3 400 or the current session key K_{gNB} (horizontal key derivation), depending on whether there is an unused parameter pair associated with the target base station gNB3 400. In step S4140, the UE 100 determines to use the derived intermediate session key K_{NG-RAN}* as the session key K_{gNB} to be used for communication with the target base station gNB3 400 and transmits a fist UL transmission to the target base station gNB3 400. The subsequent procedure corresponds substantially to the procedure of embodiment 2, wherein the target base station gNB3 400 detects the UE 100 and performs path update with AMF 500.

In a case where the subsequent cell switch is to be performed to a cell served by gNB2 200, that is, the source gNB involved in the preparation phase, the procedure corresponds to the procedure of the subsequent cell switch illustrated in Fig. 9b, wherein
(i) gNB2 200 is the target gNB,
(ii) the LTM cell change notification is transmitted from the serving gNB1 300 to the target gNB2 200,
(iii) the target gNB2 200 performs a step corresponding to step S4420 to derive the session key and a step corresponding to step S4430 to use the derived session key for communication with the UE 100,
(iv) the UE 100 transmits the first UL transmission to the target gNB2 200, and
(v) the target gNB2 200 detects the UE 100 and performs path update with AMF 500.

It is noted that further subsequent cell switches may be performed accordingly.

### Further implementations

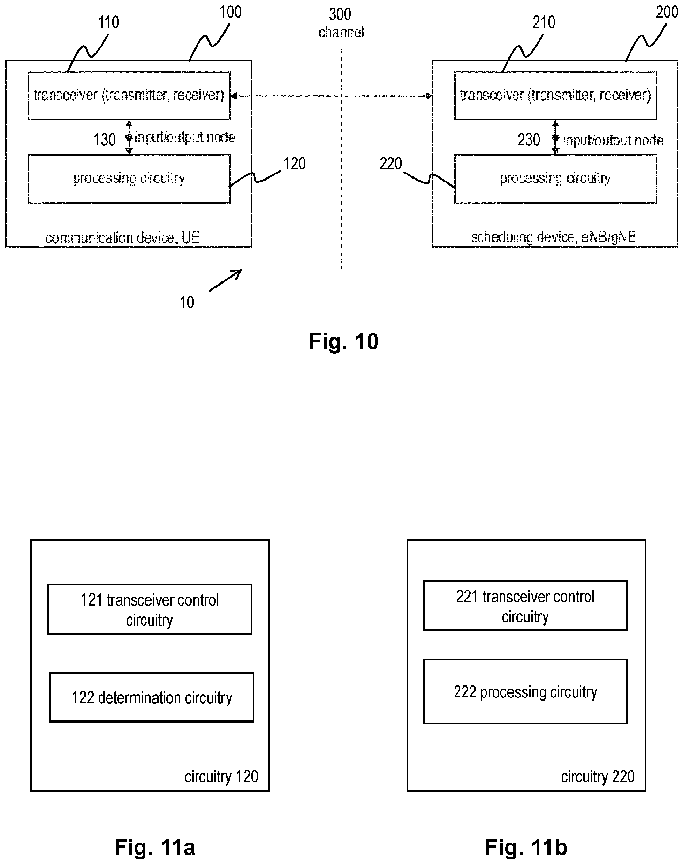

**Fig. 10** illustrates a general, simplified and exemplary block diagram of a user equipment, UE, 100 (also termed communication device) and a base station 200 which is here exemplarily assumed to be a scheduling device like an eNB or gNB (network node). However, in general, a base station may also be a terminal in case of a sidelink connection between two terminals. Moreover, in particular with respect to the use cases of URLLC; eMBB, and mMTC, the communication device 100 may also be a sensor device, a wearable device, or a connected vehicle, or a controller of an automated machine in an industrial factory. Further, a communication device may be able to function as a relay between base station and another communication device (e.g. the disclosure is not limited to communication "terminals" or user "terminals").

The UE 100 and the base station 200 (eNB/gNB) are communicating with each other over a (wireless) physical channel 300 respectively using their transceivers 110 (UE side) and 210 (base station side). Together, the base station 200 and the UE 100 form a communication system 10. The communication system 10 may further include other entities such as further base stations or those shown in Fig. 1.

The UE 100 may comprise the transceiver 110 and a (processing) circuitry 120, and the base station 200 may comprise the transceiver 210 and a (processing) circuitry 220. The transceiver 110, 210 in turn may comprise and/or function as a receiver and/or a transmitter. In this disclosure, in other words, the term "transceiver" is used for hardware and/or software components that allow the UE 100, or, respectively base station 200 to transmit and/or receive radio signals over a wireless channel 300. Accordingly, a transceiver corresponds to a receiver, a transmitter, or a combination of receiver and transmitter. Typically, a base station 200 and a UE 100 are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc.

As shown in **Fig. 10****,** in some embodiments, the user equipment, UE, 100, comprises a transceiver 110 and circuitry 120. The circuitry 120, in operation, stores a list of parameter pairs, wherein each parameter pair includes a next hop, NH, parameter and an NH chaining counter, NCC, and each parameter pair is associated with one of at least one candidate base station. The UE 100 further comprises a transceiver 110 which, in operation, receives a cell switch command including an indication of a target cell of a target base station, the target base station being one of the at least one candidate base station. The circuitry 120 further derives a session key using a parameter pair associated with a serving base station or a parameter pair associated with the target base station, and uses the derived session key for communication with the target base station.

In some embodiments, the UE 100 comprises a transceiver which, in operation, receives a cell switch command including an indication of a target cell of a target base station, and an indication of a next hop chaining counter, NCC. The UE 100 further comprises circuitry 120 which, in operation, derives a session key using the NCC indicated in the cell switch command, and uses the derived session key for communication with the target base station.

As shown in **Fig. 10****,** in some embodiments, a base station 200 comprises a transceiver 210 which, in operation, transmits a mobility configuration request to at least one candidate base station, and receives, from each of the at least one candidate base station, a first list of parameter pairs, wherein each parameter pair includes a next hop, NH, parameter and an NH chaining counter, NCC. The base station 200 further comprises circuitry 220 which, in operation, associates each received parameter pair with the respective candidate base station. The transceiver 210 further transmits a second list of parameter pairs to a UE, the second list of parameter pairs including each received parameter pair in association with the respective candidate base station.

In some embodiments, a base station 200 comprises circuitry 220 which, in operation, derives a session key for a target cell of a target base station using a next hop chaining counter, NCC. The base station 200 further comprises a transceiver 210 which, in operation, transmits a cell switch command to a user equipment, UE, the cell switch command including an indication of the target cell of the target base station, and an indication of the NCC. The transceiver 210 further transmits a cell change notification to the target base station, the cell change notification including an indication of the session key, and an indication of the NCC.

**Fig. 11a** shows a functional structure of the circuitry 120 (read in combination with Fig. 10). In particular, it includes a transceiver control circuitry 121. The transceiver control circuitry 121, in operation, controls the transceiver 110 to perform the operations described. Further, the circuitry 120 includes determination circuitry 122 which, in operation, performs the operations of the circuitry 120 as described.

**Fig. 11b** shows a functional structure of the circuitry 220 (read in combination with Fig. 10).. In particular, circuitry 220 includes a transceiver control circuitry 221. The transceiver control circuitry 221, in operation, controls the transceiver 210. Further, the circuitry 220 includes processing circuitry 222 which, in operation, performs operations of the circuitry 220.

The circuitries 120, 220 may be one or more pieces of hardware such as one or more processors or any LSIs. Between the transceiver 110, 210 and the circuitry 120, 220 there is an input/output point (or node) 130, 230 over which the processing circuitry 120, 220, when in operation, can control the transceiver 110, 210, i.e. control the receiver and/or the transmitter and exchange reception/transmission data. The transceiver 110, 210, as the transmitter and receiver, may include the RF (radio frequency) front including one or more antennas, amplifiers, RF modulators/demodulators and the like. The circuitry 120, 220 may implement control tasks such as controlling the transceiver 110, 210 to transmit user data and control data provided by the circuitry 120, 220 and/or receive user data and control data that is further processed by the circuitry 120, 220. The circuitry 120, 220 may also be responsible for performing other processes such as determining, deciding, calculating, measuring, etc. The transmitter may be responsible for performing the process of transmitting and other processes related thereto. The receiver may be responsible for performing the process of receiving and other processes related thereto.

It is noted that the circuitries 120, 220 may be a general processing circuitry including one or more processors which may execute code instructions stored in a memory (which may be also part of the circuitry 120, 220) and which may include portions of the code instructions corresponding to the functionality described above with reference to respective circuitry. The functionality may be provided by hardware adaption and/or by software. The present disclosure is not limited to any particular circuitry and embodiments of the disclosure may include dedicated or programmable hardware or general purpose hardware or any combination thereof.

It is further noted that any of the steps/operations described below may be performed or controlled by the circuitry 120 (on the UE 100 side) and/or the circuitry 220 (on the base station 200 side). In particular, in the further description, the details and embodiments apply to each of the UE 100, the base station 200 and the methods unless explicit statement or context indicates otherwise.

It is further noted that these and other aspects may be combined with/included in the above specific embodiments of the present disclosure.

### First unused pair of parameters

In the above description of vertical key derivation, it has been mentioned that UE may use the first unused pair of {NH, NCC} to derive an intermediate session key K_{NG-RAN}*. This should be understood as an example rather than limitation of the disclosure. In principle, there is no problem to use any pair in the list (e.g. the second unused pair, or the third unused pair, etc.), to align usage between UE and base station. However, doing this might require that both UE and base station maintain a pointer to point to the corresponding pair in the list. On the other hand, it is convenient to use the *first* unused pair and delete any used pairs from the list. In this way, there may be no need to introduce a pointer to the list that would simplify the maintenance of the list.

### Indication of the target base station to UE

In current design of Rel-18 LTM, a cell switch command only indicates the target cell (because all candidate cells belong to the same gNB in Rel-18). In the scope of current disclosure, because the target gNB could be a different gNB (i.e. an inter-gNB cell switch is to be performed), the UE might need to know the target gNB in addition to the target cell. One design would be that the mapping between cells to gNB is configured in the candidate cell configuration. With such knowledge, as long as the UE is indicated a target cell, the UE knows its corresponding target gNB. Such a design may have the merit that a legacy cell switch command can be reused without introducing a new field for the indication of target gNB. On the other hand, a new field may be introduced in the cell switch command to indicate the target gNB directly.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

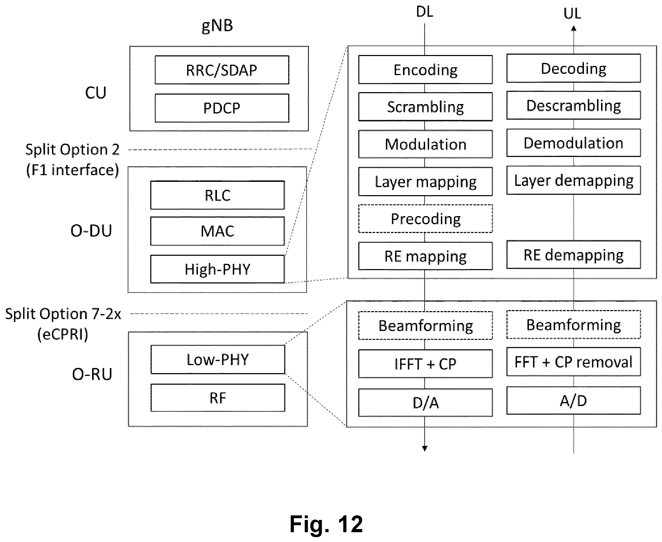

**FIG. 12** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, provided is a user equipment, UE, comprising circuitry which, in operation, stores a list of parameter pairs, wherein each parameter pair includes a next hop, NH, parameter and an NH chaining counter, NCC, and each parameter pair is associated with one of at least one candidate base station; and a transceiver which, in operation, receives a cell switch command including an indication of a target cell of a target base station, the target base station being one of the at least one candidate base station, wherein the circuitry which, in operation, derives a session key using a parameter pair associated with a serving base station or a parameter pair associated with the target base station; and uses the derived session key for communication with the target base station.

In an embodiment, the transceiver, in operation, receives the list of parameter pairs from a serving base station.

In an embodiment, the circuitry, in operation, derives the session key using the parameter pair associated with the serving base station.

For example, the circuitry, in operation, derives the session key by performing either vertical session key derivation or horizontal session key derivation, depending on whether there is an unused parameter pair associated with the serving base station.

In an embodiment, the circuitry, in operation, derives the session key using the parameter pair associated with the target base station.

For example, the circuitry, in operation, derives the session key by performing either vertical session key derivation or horizontal session key derivation, depending on whether there is an unused parameter pair associated with the target base station.

Further provided is a method for a user equipment, UE, comprising, storing a list of parameter pairs, wherein each parameter pair includes a next hop, NH, parameter and an NH chaining counter, NCC, and each parameter pair is associated with one of at least one candidate base station; receiving a cell switch command including an indication of a target cell of a target base station, the target base station being one of the at least one candidate base station; deriving a session key using a parameter pair associated with a serving base station or a parameter pair associated with the target base station; and using the derived session key for communication with the target base station

In an embodiment, the method comprises receiving the list of parameter pairs from a serving base station.

In an embodiment, the session key is derived using the parameter pair associated with the serving base station.

For example, the session key is derived by performing either vertical session key derivation or horizontal session key derivation, depending on whether there is an unused parameter pair associated with the serving base station.

In an embodiment , the session key is derived using the parameter pair associated with the target base station.

For example, the session key is derived by performing either vertical session key derivation or horizontal session key derivation, depending on whether there is an unused parameter pair associated with the target base station.

According to a second aspect, provided is a base station, comprising a transceiver which, in operation, transmits a mobility configuration request to at least one candidate base station; and receives, from each of the at least one candidate base station, a first list of parameter pairs, wherein each parameter pair includes a next hop, NH, parameter and an NH chaining counter, NCC; and circuitry which, in operation, associates each received parameter pair with the respective candidate base station, wherein the transceiver, in operation, transmits a second list of parameter pairs to a UE, the second list of parameter pairs including each received parameter pair in association with the respective candidate base station.

Further provided is a method for a base station, comprising transmitting a mobility configuration request to at least one candidate base station; receiving, from each of the at least one candidate base station, a first list of parameter pairs, wherein each parameter pair includes a next hop, NH, parameter and an NH chaining counter, NCC; associating each received parameter pair with the respective candidate base station; and transmitting a second list of parameter pairs to a UE, the second list of parameter pairs including each received parameter pair in association with the respective candidate base station.

According to a fourth aspect, provided is a base station system, comprising a base station according to the second aspect as a first base station; and a second base station comprising circuitry and a transceiver, the second base station being one of the at least one candidate base station.

In an embodiment, when the first base station or the second base station is serving the UE as a serving base station, in the serving base station, the circuitry, in operation, derives a session key for a target cell of a target base station, the target base station being one of the at least one candidate base station; and the transceiver, in operation transmits a cell switch command to the UE, the cell switch command including an indication of the target cell of the target base station; and transmits a cell change notification including an indication of the session key to the target base station for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the base station system comprises the target base station, comprising circuitry and a transceiver, wherein in the target base station, the transceiver, in operation, receives the cell change notification; and the circuitry, in operation, uses the session key indicated in the cell change notification for communication with the UE.

Further provided is a method for a base station system according to the fourth aspect, comprising, when the first base station or the second base station is serving the UE as a serving base station, in the serving base station, deriving a session key for a target cell of a target base station, the target base station being one of the at least one candidate base station; transmitting a cell switch command to the UE, the cell switch command including an indication of the target cell of the target base station; and transmitting a cell change notification including an indication of the session key to the target base station for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the method comprises, in the target base station, receiving the cell change notification; and using the session key indicated in the cell change notification for communication with the UE.

According to a fifth aspect, provided is a base station as a target base station, wherein the target base station comprises circuitry and a transceiver, wherein the transceiver, in operation, receives the cell change notification; and the circuitry, in operation, uses the session key indicated in the cell change notification for communication with the UE.

Further provided is a method or a target base station, comprising receiving the cell change notification; and using the session key indicated in the cell change notification for communication with the UE.

In an embodiment of the fourth aspect and its embodiments and examples, when the first base station or the second base station is serving the UE as a serving base station, in the serving base station, the transceiver, in operation, transmits a cell switch command to the UE, the cell switch command including an indication of a target cell of a target base station, the target base station being one of the at least one candidate base station; and transmits a cell change notification including an indication of a current session key to the target base station for derivation of a session key for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the base station system comprises the target base station, comprising circuitry and a transceiver, wherein in the target base station, the transceiver, in operation, receives the cell change notification; the circuitry, in operation, derives the session key by performing either vertical session key derivation or horizontal session key derivation using the current session key indicated in the cell change notification, depending on whether there is an unused parameter pair associated with the target base station; and the circuitry, in operation, uses the derived session key for communication with the UE.

Further provided is a method for a base station system according to the fourth aspect and its embodiments and examples, wherein when the first base station or the second base station is serving the UE as a serving base station, in the serving base station, transmitting a cell switch command to the UE, the cell switch command including an indication of a target cell of a target base station, the target base station being one of the at least one candidate base station; and transmitting a cell change notification including an indication of a current session key to the target base station for derivation of a session key for communication with the UE.

According to a sixth aspect, provided is a base station as a target base station, comprising circuitry and a transceiver, wherein the transceiver, in operation, receives the cell change notification; the circuitry, in operation, derives the session key by performing either vertical session key derivation or horizontal session key derivation using the current session key indicated in the cell change notification, depending on whether there is an unused parameter pair associated with the target base station; and the circuitry, in operation, uses the derived session key for communication with the UE.

Further provided is a method for a base station as a target base station, comprising receiving the cell change notification; deriving the session key by performing either vertical session key derivation or horizontal session key derivation using the current session key indicated in the cell change notification, depending on whether there is an unused parameter pair associated with the target base station; and using the derived session key for communication with the UE.

According to a seventh aspect, provided is a user equipment, UE, comprising a transceiver which, in operation, receives a cell switch command including an indication of a target cell of a target base station, and an indication of a next hop chaining counter, NCC; and circuitry which, in operation, derives a session key using the NCC indicated in the cell switch command, and uses the derived session key for communication with the target base station.

Further provided is a method for a UE, comprising receiving a cell switch command including an indication of a target cell of a target base station, and an indication of a next hop chaining counter, NCC; deriving a session key using the NCC indicated in the cell switch command; and using the derived session key for communication with the target base station.

According to an eighth aspect, provided is a base station, comprising circuitry which, in operation, derives a session key for a target cell of a target base station using a next hop chaining counter, NCC; and a transceiver which, in operation, transmits a cell switch command to a user equipment, UE, the cell switch command including an indication of the target cell of the target base station, and an indication of the NCC; and transmits a cell change notification to the target base station, the cell change notification including an indication of the session key, and an indication of the NCC.

Further provided is a method for a base station, comprising deriving a session key for a target cell of a target base station using a next hop chaining counter, NCC; transmitting a cell switch command to a user equipment, UE, the cell switch command including an indication of the target cell of the target base station, and an indication of the NCC; and transmitting a cell change notification to the target base station, the cell change notification including an indication of the session key, and an indication of the NCC.

According to a ninth aspect, provided is a base station system, comprising a base station according to the eighth aspect; and the target base station, comprising circuitry and a transceiver, wherein in the target base station the transceiver, in operation, receives the cell change notification; and the circuitry, in operation, uses the session key indicated in the cell change notification for communication with the UE.

Further provided is a method for a base station system, comprising, in the target base station, receiving the cell change notification; and using the session key indicated in the cell change notification for communication with the UE.

According to a tenth aspect, provided is a base station as a target base station, comprising circuitry and a transceiver, wherein the transceiver, in operation, receives the cell change notification; and the circuitry, in operation, uses the session key indicated in the cell change notification for communication with the UE.

Further provided is a method for a base station as a target base station, comprising receiving the cell change notification; and using the session key indicated in the cell change notification for communication with the UE.

According to an eleventh aspect, provided is a user equipment, UE, comprising a transceiver which, in operation, receives a cell switch command including an indication of a target cell of a target base station, the target base station being one of the at least one candidate base station; and circuitry which, in operation, derives a session key using a parameter indicated in the cell switch command or using a parameter pair including a next hop, NH, parameter and an NH chaining counter, NCC ; and uses the derived session key for communication with the target base station.

In an embodiment, the parameter pair may be pre-obtained.

In an embodiment, the circuitry, in operation, stores a list of parameter pairs, wherein each parameter pair includes a next hop, NH, parameter and an NH chaining counter, NCC, and each parameter pair is associated with one of at least one candidate base station; and the circuitry, in operation, derives the session key using a parameter pair associated with a serving base station or a parameter pair associated with the target base station.

In an embodiment, the transceiver, in operation, receives the list of parameter pairs from a serving base station.

In an embodiment, the circuitry, in operation, derives the session key using the parameter pair associated with the serving base station.

For example, the circuitry, in operation, derives the session key by performing either vertical session key derivation or horizontal session key derivation, depending on whether there is an unused parameter pair associated with the serving base station.

In an embodiment, the circuitry, in operation, derives the session key using the parameter pair associated with the target base station.

For example, the circuitry, in operation, derives the session key by performing either vertical session key derivation or horizontal session key derivation, depending on whether there is an unused parameter pair associated with the target base station.

In an embodiment, the circuitry, in operation, derives the session key by performing either vertical session key derivation or horizontal session key derivation, depending on whether there is an unused parameter pair associated with respective base station.

In an embodiment, the circuitry, in operation, derives the session key using the NCC indicated in the cell switch command.

Further provided is a method for a UE, comprising receiving a cell switch command including an indication of a target cell of a target base station, the target base station being one of the at least one candidate base station; deriving a session key using a parameter indicated in the cell switch command or using a parameter pair including a next hop, NH, parameter and an NH chaining counter, NCC; and using the derived session key for communication with the target base station.

In an embodiment, the method comprises storing a list of parameter pairs, wherein each parameter pair includes a next hop, NH, parameter and an NH chaining counter, NCC, and each parameter pair is associated with one of at least one candidate base station; and deriving the session key using a parameter pair associated with a serving base station or a parameter pair associated with the target base station.

In an embodiment, the method comprises receiving the list of parameter pairs from a serving base station.

In an embodiment, the method comprises deriving the session key using the parameter pair associated with the serving base station.

For example, the session key is derived by performing either vertical session key derivation or horizontal session key derivation, depending on whether there is an unused parameter pair associated with the serving base station.

In an embodiment, the session key is derived using the parameter pair associated with the target base station.

For example, the session key is derived by performing either vertical session key derivation or horizontal session key derivation, depending on whether there is an unused parameter pair associated with the target base station.

In an embodiment, the session key is derived by performing either vertical session key derivation or horizontal session key derivation, depending on whether there is an unused parameter pair associated with respective base station.

In an embodiment, the session key is derived using the NCC indicated in the cell switch command.

According to an twelfth aspect, provided is a base station, comprising a transceiver which, in operation, transmits a mobility configuration request to at least one candidate base station; and receives, from each of the at least one candidate base station, a first list of parameter pairs, wherein each parameter pair includes a next hop, NH, parameter and an NH chaining counter, NCC; and circuitry which, in operation, associates each received parameter pair with the respective candidate base station, wherein the transceiver, in operation, transmits a second list of parameter pairs to a UE, the second list of parameter pairs including each received parameter pair in association with the respective candidate base station.

Further provided is a method for a base station, comprising transmitting a mobility configuration request to at least one candidate base station; receiving, from each of the at least one candidate base station, a first list of parameter pairs, wherein each parameter pair includes a next hop, NH, parameter and an NH chaining counter, NCC; associating each received parameter pair with the respective candidate base station; and transmitting a second list of parameter pairs to a UE, the second list of parameter pairs including each received parameter pair in association with the respective candidate base station.

According to a thirteenth aspect, provided is a base station system, comprising a base station according to the twelfth aspect; and a second base station comprising circuitry and a transceiver, the second base station being one of the at least one candidate base station.

In an embodiment, when the first base station or the second base station is serving the UE as a serving base station, in the serving base station, the circuitry, in operation, derives a session key for a target cell of a target base station, the target base station being one of the at least one candidate base station; and the transceiver, in operation transmits a cell switch command to the UE, the cell switch command including an indication of the target cell of the target base station; and transmits a cell change notification including an indication of the session key to the target base station for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the base station system comprises the target base station, comprising circuitry and a transceiver, wherein in the target base station, the transceiver, in operation, receives the cell change notification; and the circuitry, in operation, uses the session key indicated in the cell change notification for communication with the UE.

Further provided is a method for a base station system according to the thirteenth aspect, comprising, when the first base station or the second base station is serving the UE as a serving base station, in the serving base station, deriving a session key for a target cell of a target base station, the target base station being one of the at least one candidate base station; transmitting a cell switch command to the UE, the cell switch command including an indication of the target cell of the target base station; and transmitting a cell change notification including an indication of the session key to the target base station for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the method comprises, in target base station, receiving the cell change notification; and using the session key indicated in the cell change notification for communication with the UE.

According to a fourteenth aspect, provided is a base station as a target base station, comprising circuitry and a transceiver, wherein the transceiver, in operation, receives the cell change notification; and the circuitry, in operation, uses the session key indicated in the cell change notification for communication with the UE.

Further provided is a method for a base station as a target base station, comprising receiving the cell change notification; and using the session key indicated in the cell change notification for communication with the UE.

In an embodiment of the thirteenth aspect and its embodiments and examples, when the first base station or the second base station is serving the UE as a serving base station, in the serving base station, the transceiver, in operation, transmits a cell switch command to the UE, the cell switch command including an indication of a target cell of a target base station, the target base station being one of the at least one candidate base station; and transmits a cell change notification including an indication of a current session key to the target base station for derivation of a session key for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the base station system comprises the target base station, comprising circuitry and a transceiver, wherein in the target base station, the transceiver, in operation, receives the cell change notification; the circuitry, in operation, derives the session key by performing either vertical session key derivation or horizontal session key derivation using the current session key indicated in the cell change notification, depending on whether there is an unused parameter pair associated with the target base station; and the circuitry, in operation, uses the derived session key for communication with the UE.

Further provided is a method for a base station system according to the thirteenth aspect and its embodiments and examples, comprising, when the first base station or the second base station is serving the UE as a serving base station, in the serving base station, transmitting a cell switch command to the UE, the cell switch command including an indication of a target cell of a target base station, the target base station being one of the at least one candidate base station; and transmitting a cell change notification including an indication of a current session key to the target base station for derivation of a session key for communication with the UE.

For example, when the first base station is serving the UE as the serving base station, the target base station is the second base station.

For example, when the second base station is serving the UE as the serving base station, the target base station is the first base station.

For example, when the second base station is serving the UE as the serving base station, the target base station is a base station different from the first base station.

In an embodiment, the method comprises, in the target base station, receiving the cell change notification; deriving the session key by performing either vertical session key derivation or horizontal session key derivation using the current session key indicated in the cell change notification, depending on whether there is an unused parameter pair associated with the target base station; and using the derived session key for communication with the UE.

According to a fifteenth aspect, provided is a base station as a target base station, comprising circuitry and a transceiver, wherein the transceiver, in operation, receives the cell change notification; the circuitry, in operation, derives the session key by performing either vertical session key derivation or horizontal session key derivation using the current session key indicated in the cell change notification, depending on whether there is an unused parameter pair associated with the target base station; and the circuitry, in operation, uses the derived session key for communication with the UE.

Further provided is a method for a base station as a target base station, comprising receiving the cell change notification; deriving the session key by performing either vertical session key derivation or horizontal session key derivation using the current session key indicated in the cell change notification, depending on whether there is an unused parameter pair associated with the target base station; and using the derived session key for communication with the UE

According to a sixteenth aspect, provided is a base station, comprising circuitry which, in operation, derives a session key for a target cell of a target base station using a next hop chaining counter, NCC; and a transceiver which, in operation, transmits a cell switch command to a user equipment, UE, the cell switch command including an indication of the target cell of the target base station, and an indication of the NCC; and transmits a cell change notification to the target base station, the cell change notification including an indication of the session key, and an indication of the NCC.

Further provided is a method for a base station, comprising deriving a session key for a target cell of a target base station using a next hop chaining counter, NCC; and a transceiver which, in operation, transmitting a cell switch command to a user equipment, UE, the cell switch command including an indication of the target cell of the target base station, and an indication of the NCC; and transmitting a cell change notification to the target base station, the cell change notification including an indication of the session key, and an indication of the NCC.

According to a seventeenth aspect, provided is a base station system, comprising a base station according to the sixteenth aspect; and the target base station, comprising circuitry and a transceiver, wherein in the target base station the transceiver, in operation, receives the cell change notification; and the circuitry, in operation, uses the session key indicated in the cell change notification for communication with the UE.

Further provided is a method for a base station system, comprising, in the target base station, receiving the cell change notification; and using the session key indicated in the cell change notification for communication with the UE.

According to an eighteenth aspect, provided is a base station as a target base station, comprising circuitry and a transceiver, wherein the transceiver, in operation, receives the cell change notification; and the circuitry, in operation, uses the session key indicated in the cell change notification for communication with the UE.

Further provided is a method for a base station as a target base station, comprising receiving the cell change notification; and using the session key indicated in the cell change notification for communication with the UE.

According to a nineteenth aspect, provided is a communication system including a combination of a UE and at least one base station according to any of the above-described aspects.

Further provided is a communication method including a combination of steps of a method for a UE and a method for a base station according to any of the above-described aspects.

Summarizing, provided is a user equipment, user equipment, UE, comprising circuitry which, in operation, stores a list of parameter pairs, wherein each parameter pair includes a next hop, NH, parameter and an NH chaining counter, NCC, and each parameter pair is associated with one of at least one candidate base station. The US further comprises a transceiver which, in operation, receives a cell switch command including an indication of a target cell of a target base station, the target base station being one of the at least one candidate base station. The circuitry which, in operation, derives a session key using a parameter pair associated with a serving base station or a parameter pair associated with the target base station; and uses the derived session key for communication with the target base station.

## Claims

1. A user equipment, UE, comprising
circuitry which, in operation, stores a list of parameter pairs, wherein
each parameter pair includes a next hop, NH, parameter and an NH chaining counter, NCC, and
each parameter pair is associated with one of at least one candidate base station; and
a transceiver which, in operation,
receives a cell switch command including an indication of a target cell of a target base station, the target base station being one of the at least one candidate base station, wherein
the circuitry which, in operation,
derives a session key using a parameter pair associated with a serving base station or a parameter pair associated with the target base station; and uses the derived session key for communication with the target base station.

2. The UE according to claim 1, wherein
the transceiver, in operation, receives the list of parameter pairs from a serving base station.

3. The UE according to claim 1 or 2, wherein
the circuitry, in operation, derives the session key using the parameter pair associated with the serving base station.

4. The UE according to claim 3, wherein
the circuitry, in operation, derives the session key by performing either vertical session key derivation or horizontal session key derivation, depending on whether there is an unused parameter pair associated with the serving base station.

5. The UE according to claim 1 or 2, wherein
the circuitry, in operation, derives the session key using the parameter pair associated with the target base station.

6. The UE according to claim 5, wherein
the circuitry, in operation, derives the session key by performing either vertical session key derivation or horizontal session key derivation, depending on whether there is an unused parameter pair associated with the target base station.

7. A base station, comprising
a transceiver which, in operation,
transmits a mobility configuration request to at least one candidate base station; and
receives, from each of the at least one candidate base station, a first list of parameter pairs, wherein each parameter pair includes a next hop, NH, parameter and an NH chaining counter, NCC; and
circuitry which, in operation, associates each received parameter pair with the respective candidate base station, wherein
the transceiver, in operation, transmits a second list of parameter pairs to a UE, the second list of parameter pairs including each received parameter pair in association with the respective candidate base station.

8. A base station system, comprising
a base station according to claim 7 as a first base station; and
a second base station comprising circuitry and a transceiver, the second base station being one of the at least one candidate base station.

9. The base station system according to claim 8, wherein
when the first base station or the second base station is serving the UE as a serving base station, in the serving base station,
the circuitry, in operation, derives a session key for a target cell of a target base station, the target base station being one of the at least one candidate base station; and
the transceiver, in operation
transmits a cell switch command to the UE, the cell switch command including an indication of the target cell of the target base station; and
transmits a cell change notification including an indication of the session key to the target base station for communication with the UE.

10. The base station system according to claim 9, comprising
the target base station, comprising circuitry and a transceiver, wherein
in the target base station,
the transceiver, in operation, receives the cell change notification; and
the circuitry, in operation, uses the session key indicated in the cell change notification for communication with the UE.

11. The base station system according to claim 8, wherein
when the first base station or the second base station is serving the UE as a serving base station, in the serving base station,
the transceiver, in operation,
transmits a cell switch command to the UE, the cell switch command including an indication of a target cell of a target base station, the target base station being one of the at least one candidate base station; and
transmits a cell change notification including an indication of a current session key to the target base station for derivation of a session key for communication with the UE.

12. The base station system according to claim 11, comprising
the target base station, comprising circuitry and a transceiver, wherein
in the target base station,
the transceiver, in operation, receives the cell change notification;
the circuitry, in operation, derives the session key by performing either vertical session key derivation or horizontal session key derivation using the current session key indicated in the cell change notification, depending on whether there is an unused parameter pair associated with the target base station; and
the circuitry, in operation, uses the derived session key for communication with the UE.

13. A user equipment, UE, comprising
a transceiver which, in operation, receives a cell switch command including
an indication of a target cell of a target base station, and
an indication of a next hop chaining counter, NCC; and
circuitry which, in operation,
derives a session key using the NCC indicated in the cell switch command, and
uses the derived session key for communication with the target base station.

14. A base station, comprising
circuitry which, in operation, derives a session key for a target cell of a target base station using a next hop chaining counter, NCC; and
a transceiver which, in operation,
transmits a cell switch command to a user equipment, UE, the cell switch command including
an indication of the target cell of the target base station, and
an indication of the NCC; and
transmits a cell change notification to the target base station, the cell change notification including
an indication of the session key, and
an indication of the NCC.

15. A base station system, comprising
a base station according to claim 14; and
the target base station, comprising circuitry and a transceiver, wherein
in the target base station
the transceiver, in operation, receives the cell change notification; and
the circuitry, in operation, uses the session key indicated in the cell change notification for communication with the UE.
